# EUROPEAN PATENT SPECIFICATION

(11) **EP 2 937 290 B1**
(45) Date of publication and mention of the grant of the patent: **10.01.2018**
(21) Application number: 15165223.7
(22) Date of filing: 27.04.2015
(51) Int. Cl.: B65B 57/08, B65B 59/00, B65B 9/213, B29C 65/08, B65B 9/22, B65B 9/20, B29C 65/00, B65B 9/207, B65B 51/22, B65B 51/30, B65B 57/00, B65B 61/06

(54) **FORMING SET WITH A RFID IN A VERTICAL FLOW WRAPPER**
HERSTELLUNGSSATZ MIT EINEM RFID IN EINER VERTIKALSTRÖMUNGSVERPACKUNGSMASCHINE
ENSEMBLE CONSTITUÉ AVEC UNE IDENTIFICATION PAR RADIOFRÉQUENCE (RFID) DANS UNE MACHINE D'EMBALLAGE A ÉCOULEMENT VERTICAL

(30) Priority: 25.04.2014 EP 14166044
(43) Date of publication of application: 28.10.2015
(73) Proprietor: GEA Food Solutions Weert B.V., 6006 RV Weert (NL)
(72) Inventor: Hendriks, Peter Joseph, 6005 KJ Weert (NL); Rietjens, Peter Wilhelmus Henricus, 6011 RH Ell (NL)
(74) Representative: Wolff, Felix

(56) References cited:
- EP-A1- 0 549 806
- EP-A1- 1 266 830
- EP-A1- 2 522 585
- WO-A1-2014/002713
- DE-A1-102012 108 301

## Description

The present invention relates to a vertical flow-wrapper comprising:
- a film-feed, which feeds the film from a reel to a forming-unit,
- a forming set comprising a forming-tube and a forming-shoulder, which form a film into a film-tube,
- longitudinal sealing means to seal the longitudinal edges of the film-tube together,
- preferably ultrasonic, cross-sealing means to provide a cross-seal to the film-tube to produce individual packages and
- cutting means to separate the individual packages from the film-tube,
wherein the cross-sealing means and the cutting means are moved together with the film-tube during sealing.

This vertical flow wrapper is very well known to the person skilled of the art, for example from EP 0 549 806 A1, and is used, to form a web, for example a plastic film or a paper material, into a tube from which individual packages are produced. However, ultrasonic sealing devices are relatively complex devices and need to be protected against damage due to wrong operation of the flow wrapper. Also the forming set, particularly the forming tube needs to be protected against collision with the cross-sealing-, cutting- and/or forming means.

It was therefore the objective of the present invention to provide a vertical flow wrapper that meets these requirements.

This objective is attained by a vertical flow-wrapper according to claim 1.

The disclosure made regarding this subject matter of the present invention also applies to the other subject matters and vice versa. Subject matters disclosed regarding this subject matter can be combined with other subject matters and vice versa.

With the inventive flow wrapper, for example pouches, doy-style bags and/or Quattro-seal bags can be produced.

The present invention relates to a flow wrapper, which comprises a film feed, which feeds the plane film, for example a plastic film and/or a paper material from a reel to a forming set. This forming set comprises at least a forming tube and a forming shoulder which form the plane film into a tube. Subsequently, the longitudinal edges of the tube are sealed together by longitudinal sealing means. In a next step, the tube is filled with a packaging item and cross seals are provided to the tube to produce individually closed packages which are finally cut a part, wherein the cross seal is cut apart. The flow wrapper according to the present invention is operated with a continuously or intermittently moving film and during sealing and/or cutting, the cross sealing means and/or the cutting means are moved together with the film tube or the cross sealing means and/or the cutting means are stationary.

Preferably, the cross sealing means and/or the longitudinal sealing means seal the film by means of ultrasonic vibration. The ultrasonic sealing means therefore comprise a sonotrode and an anvil, wherein, during sealing, the film is compressed between the sonotorede and the anvil due to a movement of the sontrode and/or the anvil relative to each other and a certain pressure is applied to the film. In case of the longitudinal sealing means, the anvil can be the forming tube. For the safety and/or the lifetime of the sontrode, it is important that it does not touch the anvil.

According to the present invention, the forming set comprises a data storage means, preferably a RFID (Radio-frequency.identification-device), and the flow wrapper comprises a read unit to read the data from the data storage means. On this data storage means, data about the package that can be produced with the forming set, particularly data about the width (extension perpendicular to the direction of motion of the film), the length (extension parallel to the direction of motion of the film) and/or the desired shape of the package can be stored and/or the data storage means comprises data about the maximal and/or desirable sealing pressure. Based on at least one of these values and/or the shape of the package, particularly its width, a computer system, which is part of the flow wrapper can calculate the maximal or desired force that should be applied during sealing. The data storage means can also comprise data about the motion of the cross sealing and/or cutting means and/or the computer system can calculate these figures based on the data about the package stored on the data storage unit, particularly the length of the bag parallel to the direction of motion of the film. In a preferred embodiment of the present invention, the package to be produced is for example, doy- or quadro-seal package, i.e. the bottom and/or the top comprises gussets which are formed into the film tube by forming means. Inventively, the data storage means comprises data about this motion and/or data which allows a control system to motion of these means to form the desired bag and/or avoid collision with the forming tube.

Preferably the data storage means is a read/write-unit, i.e. not only data can be retrieved from the means, but also modified data can be stored on the means. The data on the data storage means can be provided by the manufacturer of the flow wrapper and/or the forming set and/or can be modified by an operator. Therefore, the inventive flow wrapper preferably comprises a computer-/control system, which allows the communication, i.e. read/write, with the data storage means. Preferably, the control unit, preferably a computer with a CPU comprises an access-system and more preferably, only persons who have a certain access-level can manipulate the data stored on the data storage means. This assures that the wrong person alters the data stored in the data storage means.

The cross sealing- and/or cutting means are preferably moved by one or more motor(s) each preferably with a gear, for example a crank mechanism with an upper and a lower dead end center. Each motor is preferably an electromotor, more preferably a servo motor or a step motor. Based on the data stored in the data storage means, the operation of the motor is set automatically. This assures, that the motion of the cross sealing and/or cutting means fit with the forming set, so that, for example, the cross sealing and/or cutting means do not collide with the forming tube.

According to the present invention, the data storage means comprises data about the shape of the package to be produced, the length (L) and/or the width (W) of the package.

Preferably, the vertical flow-wrapper comprises forming means which preferably co-move together with the cross-sealing means. These forming means are for example used to form a gusset into the top and/or the bottom of the package to be produced.

Preferably, the vertical flow-wrapper comprises a safety-system which prevents its start in case the data cannot be read and/or does not match. This preferred embodiment of the present invention assures that the forming set, the operational parameters fit such that the inventive flow wrapper is not damaged.

Preferably, the vertical flow-wrapper comprises means to receive data about the film. This data can be manually provided or can be retrieved automatically from the film reel, for example from a data storage unit, preferably a RFID provided at the film. This preferred embodiment of the present invention assures that the film provided matches with the forming set and is an additional safety feature for the sonotrode, because it is, for example, taken care of that enough film material is provided between the sonotrode and the anvil.

Another subject matter of the present invention is a method according to claim 7.

The disclosure made regarding this subject matter of the present invention also applies to the other subject matters and vice versa. Subject matters disclosed regarding this subject matter can be combined with other subject matters and vice versa.

According to this embodiment of the present invention, data which is preferably stored on the forming set is read from a data storage means after the forming set has been installed. The operational parameters are then automatically adjusted to the data retrieved from the data storage means. This embodiment assures that the forming set and the operational parameter fit so that the flow wrapper is not damaged and/or a quality package is produced.

Preferably, the sealing pressure of the cross- sealing- and/or longitudinal sealing means is adjusted and/or limited based on the data retrieved from the data storage means.

Preferably, the motion of the cross-sealing, cutting- and/or forming means is adjusted based on the data retrieved from the data storage means.

The invention is now explained according to figures 1 - 4. These explanations do not limit the scope of protection. The explanations are applicable for all inventions of the present application, respectively.
- **Figure 1**: shows the inventive flow wrapper.
- **Figure 2**: shows a package
- **Figures 3 and 4**: shows details of the inventive flow wrapper..

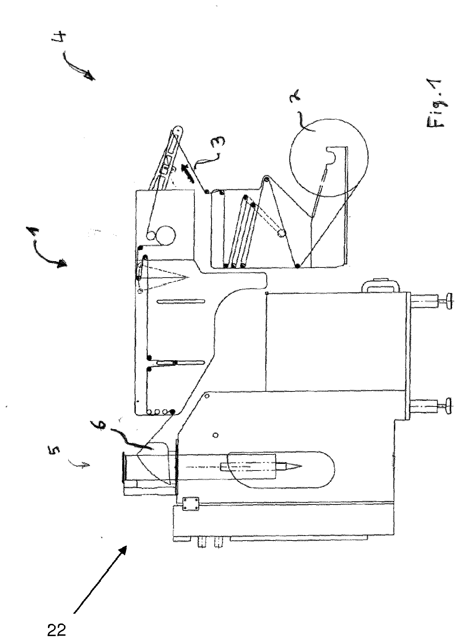

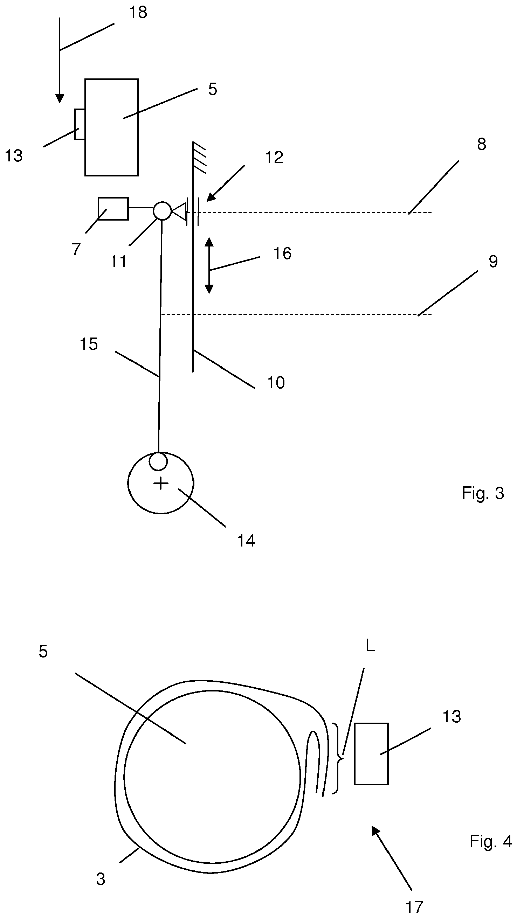

**Figures 1** **and** **3** shows the inventive flow wrapper 1. A film 3, for example a plastic film or a paper material is unrolled from a reel 2 and transported by means of a film feed 4 to a forming set 22, which comprises a forming-shoulder 6 and a forming tube 5 which form the plane film 3 into a tube, whose edges are subsequently sealed together by a longitudinal seal provided by longitudinal sealing means 13, which can ultrasonic sealing means. The person skilled in the art understands that in in case the longitudinal sealing means are based on ultrasonic means, the forming tube 5 can be the anvil for the sonotrode. The film tube is then filled with the packaging-item via the forming tube and subsequently provided with cross seals by a cross sealing means 7, which are according to the present invention is preferably ultrasonic sealing means with a sonotrode and an anvil. These packages, for example pouches or doy style bags or quattro-seal-bags, are then cut apart by a cutting means 7. In case that the package shall have gussets, forming means are also needed, which are, in general, also connected to the drive of the cross sealing- and cutting-means. The flow wrapper according to the present invention operates continuously or semi continuously, i.e. the film moves continuously or intermittently. The movement of the film tube can be utilized with drive means, which are, in most cases, provided next to the tube up stream from the sealing means 7 and/or the cutting means 7, particularly the sealing means can be used to pull the film tube down. Preferably, the cross sealing means 7, the cutting means and/or the forming means 7 have to be moved at least when they are in contact with the moving tube. This is for example utilized by a crank mechanism which reciprocates the means 7 between an upper dead center 8 and a lower dead center 9. The distance between the upper and the lower dead center determines the length of the length X of the package and/or the sealing time. Figure 3 shows details of the motion of the means 7 during the production of a package. As depicted by the arrow 16, the means 7 reciprocate during the production of each package between an upper and a lower dead end center 8, 9. In the present case the means 7 are supported by a floating bearing 12 which moves along guiding means 10, driven by a motor 14 with a crank and a lever 15.

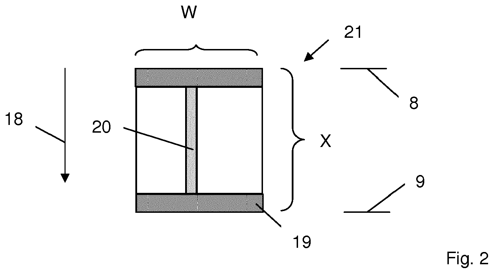

**Figure 2** shows an example of a package which can be produced with the inventive vertical flow wrapper. The package 21 is made from a plastic film whose ends are sealed together by the longitudinal seal 20. The top and the bottom of the package are closed by a cross seal 19, respectively. The length X of the package can be altered by moving the lower dead center away or towards the upper dead center parallel to the motion of the film tube. The same is true for the sealing time. The motion of the film during the production of the package is depicted by the arrow 18. The width W of the package is determined by the cross section of the forming tube 5. The width of the longitudinal seal is determined by the cross section of the forming tube, the width of film and the shape of the package as will be explained in further detail according to Figure 4.

According to the present invention, the forming set 22 comprises data storage means, preferably an RFID, which comprises data about the package to be produced, particularly the width W of the package and preferably the length X and/or the shape of the package. Based on this data the force applied to the cross sealing means 7 is calculated and/or limited to achieve a reasonable cross seal but avoid damage of the cross sealing means 7. The force applied to the film during sealing is preferably proportional to the width W of the package to be produced. Regarding the longitudinal seal, the force applied is preferably proportional to the width of the longitudinal seal and/or the length L of the overlap of the edges of the film and/or the number of layers of film in the vicinity of the longitudinal seal, as will be further explained according to Figure 4. Preferably, the data storage means also comprises data which determines the upper dead end center 8 of the motion of the means in order to avoid that the means collide with the forming tube. Even more preferably, the data also comprises the length X of the package so that the lower dead center 9 can also be calculated.

Figure 4 shows schematically the production of the longitudinal seal by sealing means 13, which is in the present case a sonotrode. The film 3 is wrapped around the forming tube 5 and overlaps in the region in which the longitudinal seal is provided. In the present case, the one edge of the film is folded prior to sealing so that here the longitudinal seal comprises three layers. Based on the length L of the overlap and/or the number of layers, the sealing force with which the sontrode is pressed against the forming tube can be set. Preferably, the sealing force is proportional, to the length L and/or the number of layers.

### List of reference signs:

- 1: Vertical Flow-wrapper
- 2: Reel
- 3: Film, plastic film, paper
- 4: Film-feed
- 5: Forming-tube
- 6: Forming shoulder
- 7: Ultrasonic cross sealing means, cutting means and/or forming means
- 8: Upper dead center
- 9: Lower dead center
- 10: Guiding means
- 11: Pivot bearing
- 12: Floating bearing
- 13: Longitudinal sealing means
- 14: Rotating motor
- 15: lever
- 16: Movement of the cross sealing means 7, cutting means 8 and/or forming means
- 17: Overlap of the film
- 18: Movement of the film 3
- 19: Cross seal
- 20: Longitudinal seal
- 21: Package, bag
- 22: Forming set
- D: distance between lower end of the tube and upper dead center
- L: length of the overlap
- W: width of the packaging, width of the bag
- X: length of the packaging, length of the bag

## Claims

1. Vertical flow-wrapper (1) comprising:
- a film-feed (4), which feeds the film (3) from a reel (2) to a forming-unit,
- a forming set (22) comprising a forming-tube (5) and a forming-shoulder (6), which form a film (3) into a film-tube,
- longitudinal sealing means (13) to seal the longitudinal edges of the film-tube together,
- preferably ultrasonic, cross-sealing means (7) to provide a cross-seal to the film-tube to produce individual packages (26) and
- cutting means (7) to separate the individual packages from the film-tube,
wherein the cross-sealing means (7) and the cutting means (7) are moved together with the film-tube during sealing between an upper and a lower dead end center, wherein the forming set (22) comprises a data storage means, preferably an RFID, and the flow wrapper comprises a read unit to read the data on the data storage means, **characterized in that** it comprise a computer program, which automatically adjusts the motion of the cross-sealing- and the cutting-means based on the data stored in the data storage means, wherein the data storage means comprises data which determines the upper dead end center to avoid collision with the forming tube.

2. Vertical flow-wrapper (1) according to claim 1, **characterized in, that** the data storage means comprises data about the shape of the package (21) to be produced, the length (L) and/or the width (W) of the package.

3. Vertical flow-wrapper (1) according to one of the preceding claims, **characterized in, that** the forming means for forming gussets into the film tube co-move together with the cross-sealing means.

4. Vertical flow-wrapper (1) according to one of the preceding claims, **characterized in, that** it comprise a safety-system which prevents its start in case the data cannot be read and/or does not match, namely the forming set and the operational parameters do not fit

5. Vertical flow-wrapper (1) according to one of the preceding claims, **characterized in, that** it comprises means to receive data about the film (3).

6. Vertical flow-wrapper (1) according to claim 2 - 5, **characterized in that** the computer program determines whether the data stored about the package fits with the data about the film.

7. Method to produce a package (21) by applying a longitudinal seal (20) with longitudinal sealing means (13) and a cross-seal (19), preferably with ultrasonic-cross sealing means (7), respectively, to a tube made from a plane film (3) formed by a forming set (22) and by cutting the package off the film (3) by cutting means (8), wherein the cross sealing means and the cutting means are moved during sealing and cutting between an upper- and a lower dead center, wherein data about the package to be produced is read from a data storage means after the forming set has been installed, **characterized in, that** the motion of the cross-sealing and the cutting means is adjusted based on the data retrieved from the data storage means, wherein the data storage means comprises data which determines the upper dead end center to avoid collision with the forming tube.

8. Method according to claim 7, **characterized in that** the sealing pressure of the cross-sealing- and/or longitudinal sealing means is adjusted and/or limited based on the data retrieved from the data storage means.

## Patentansprüche

1. Vertikale Durchlauf-Verpackungsmaschine (1), die Folgendes aufweist:
- eine Folienzufuhr (4), die die Folie (3) einer Formungseinheit von einer Rolle (2) zuführt,
- einen Formsatz (22), der ein Formrohr (5) und eine Formschulter (6), die eine Folie (3) zu einem Filmschlauch bilden, aufweist,
- längslaufende Versiegelungsmittel (13), zum Versiegeln der längslaufenden Ränder des Filmschlauchs,
- bevorzugt Ultraschall-Querversiegelungsmittel (7) zum Bereitstellen einer Querversiegelung an dem Filmschlauch, um einzelne Verpackungen (26) zu erzeugen, und
- Schneidemittel (7) zum Trennen der einzelnen Verpackungen von dem Filmschlauch,
wobei die Querversiegelungsmittel (7) und die Schneidemittel (7) gemeinsam mit dem Filmschlauch während der Versiegelung zwischen einem oberen und einem unteren Totpunkt bewegt werden, wobei der Formsatz (22) ein Datenspeicherungsmittel, bevorzugt eine RFID, aufweist und die Durchlauf-Verpackungsmaschine eine Leseeinheit zum Auslesen der Daten aus dem Datenspeicherungsmittel aufweist, **dadurch gekennzeichnet, dass** sie ein Computerprogramm aufweist, das die Bewegung der Querversiegelungs- und Schneidemittel automatisch basierend auf den Daten, die auf dem Datenspeicherungsmittel gespeichert sind, einstellt, wobei das Datenspeicherungsmittel Daten aufweist, die den oberen Totpunkt bestimmen, um einen Zusammenstoß mit dem Formrohr zu vermeiden.

2. Vertikale Durchlauf-Verpackungsmaschine (1) nach Anspruch 1, **dadurch gekennzeichnet, dass** das Datenspeicherungsmittel Daten zu der Form der Verpackung (21), die zu erzeugen ist, der Länge (L) und/oder der Breite (W) der Verpackung aufweist.

3. Vertikale Durchlauf-Verpackungsmaschine (1) nach einem der vorhergehenden Ansprüche, **dadurch gekennzeichnet, dass** sich die Formmittel zum Formen von Zwickeln in dem Filmschlauch zusammen mit den Querversiegelungsmitteln bewegen.

4. Vertikale Durchlauf-Verpackungsmaschine (1) nach einem der vorhergehenden Ansprüche, **dadurch gekennzeichnet, dass** sie ein Sicherheitssystem aufweist, das einen Start verhindert, für den Fall, dass Daten nicht ausgelesen werden können und/oder nicht übereinstimmen, d. h. der Formsatz und die Betriebsparameter stimmen nicht überein.

5. Vertikale Durchlauf-Verpackungsmaschine (1) nach einem der vorhergehenden Ansprüche, **dadurch gekennzeichnet, dass** sie Mittel zum Empfangen von Daten zu der Folie (3) aufweist.

6. Vertikale Durchlauf-Verpackungsmaschine (1) nach den Ansprüchen 2 bis 5, **dadurch gekennzeichnet, dass** das Computerprogramm bestimmt, ob die Daten, die zu der Verpackung gespeichert sind, mit den Daten zu der Folie übereinstimmen.

7. Verfahren zum Herstellen einer Verpackung (21), indem eine längsverlaufende Versiegelung (20) mit längsverlaufenden Versiegelungsmitteln (13) und eine Querversiegelung (19), bevorzugt jeweils mit Ultraschall-Versiegelungsmitteln (7), an einen Schlauch, der aus einer ebenen Folie (3), die durch einen Formsatz (22) geformt ist, hergestellt ist, angewendet werden, und indem die Verpackung von der Folie (3) durch Schneidemittel (8) abgeschnitten wird, wobei die Querversiegelungsmittel und die Schneidemittel während des Versiegelns und Schneidens zwischen einem oberen und einem unteren Totpunkt bewegt werden, wobei Daten zu der Verpackung, die erzeugt werden soll, nach dem Installieren des Formsatzes aus einem Datenspeicherungsmittel ausgelesen werden, **dadurch gekennzeichnet, dass** die Bewegung der Querversiegelungs- und der Schneidemittel basierend auf den Daten, die aus dem Datenspeicherungsmittel ausgelesen werden, eingestellt wird, wobei das Datenspeicherungsmittel Daten aufweist, die den oberen Totpunkt bestimmen, um einen Zusammenstoß mit dem Formrohr zu vermeiden.

8. Verfahren nach Anspruch 7, **dadurch gekennzeichnet, dass** der Versiegelungsdruck der Querversiegelungs- und/oder der längsverlaufenden Versiegelungsmittel basierend auf den Daten, die aus dem Datenspeicherungsmittel ausgelesen werden, eingestellt und/oder begrenzt wird.

## Revendications

1. Machine d'emballage à circulation verticale (1) comprenant :
- un mécanisme d'avance de film (4), qui fait avancer le film (3) depuis une bobine (2) jusqu'à une unité de formage,
- un ensemble de formage (22) comprenant un tube de formage (5) et un épaulement de formage (6), qui transforment un film (3) en un tube de film,
- des moyens de scellement longitudinal (13) pour sceller ensemble les bords longitudinaux du tube de film,
- des moyens de scellement transversal, de préférence à ultrasons (7) pour doter le tube de film d'un joint d'étanchéité transversal pour produire des emballages individuels (26) et
- des moyens de coupe (7) pour séparer les emballages individuels du tube de film,
dans laquelle les moyens de scellement transversal (7) et les moyens de coupe (7) sont déplacés conjointement avec le tube de film pendant le scellement entre un point mort supérieur et inférieur,
dans laquelle l'ensemble de formage (22) comprend un moyen de stockage de données, de préférence une RFID, et la machine d'emballage à circulation comprend une unité de lecture pour lire les données sur le moyen de stockage de données,
**caractérisée en ce qu'**elle comprend un programme informatique, qui ajuste automatiquement le déplacement des moyens de scellement transversal et de coupe sur la base des données stockées dans le moyen de stockage de données, le moyen de stockage de données comprenant des données qui déterminent le point mort supérieur pour éviter une collision avec le tube de formage.

2. Machine d'emballage à circulation verticale (1) selon la revendication 1, **caractérisée en ce que** le moyen de stockage de données comprend des données sur la forme de l'emballage (21) à produire, la longueur (L) et/ou la largeur (W) de l'emballage.

3. Machine d'emballage à circulation verticale (1) selon une des revendications précédentes, **caractérisée en ce que** les moyens de formage pour former des soufflets dans le tube de film se déplacent conjointement avec les moyens de scellement transversal.

4. Machine d'emballage à circulation verticale (1) selon une des revendications précédentes, **caractérisée en ce qu'**elle comprend un système de sécurité qui empêche son démarrage dans le cas où les données ne peuvent pas être lues et/ou ne correspondent pas, autrement dit l'ensemble de formage et les paramètres opérationnels ne correspondent pas.

5. Machine d'emballage à circulation verticale (1) selon une des revendications précédentes, **caractérisée en ce qu'**elle comprend des moyens pour recevoir des données sur le film (3).

6. Machine d'emballage à circulation verticale (1) selon les revendications 2 à 5, **caractérisée en ce que** le programme informatique détermine si les données stockées sur l'emballage correspondent aux données sur le film.

7. Procédé destiné à produire un emballage (21) en appliquant un joint d'étanchéité longitudinal (20) avec des moyens de scellement longitudinal (13) et un joint d'étanchéité transversal (19), de préférence avec des moyens de scellement transversal à ultrasons (7), respectivement, à un tube fabriqué à partir d'un film plan (3) formé par un ensemble de formage (22) et en coupant l'emballage du film (3) avec des moyens de coupe (8), dans lequel les moyens de scellement transversal et les moyens de coupe sont déplacés pendant le scellement et la coupe entre un point mort supérieur et inférieur, dans lequel des données sur l'emballage à produire sont lues depuis un moyen de stockage de données après que l'ensemble de formage a été installé, **caractérisé en ce que** le déplacement des moyens de scellement transversal et de coupe est ajusté sur la base des données récupérées depuis le moyen de stockage de données, le moyen de stockage de données comprenant des données qui déterminent le point mort supérieur pour éviter une collision avec le tube de formage.

8. Procédé selon la revendication 7, **caractérisé en ce que** la pression de scellement des moyens de scellement transversal et/ou de scellement longitudinal est ajustée et/ou limitée sur la base des données récupérées depuis le moyen de stockage de données.
